# FASCICULE DE BREVET EUROPEEN

(11) **EP 2 912 306 B1**
(45) Date de publication et mention de la délivrance du brevet: **23.08.2017**
(21) Numéro de dépôt: 13782696.2
(22) Date de dépôt: 23.10.2013
(51) Int. Cl.: F03D 1/04, F01D 1/02, F03B 3/12, F03B 3/18, F03D 1/06

(54) **TURBINE COMPORTANT AU MOINS DEUX ROUES 3D CREUSES EMBOÎTÉES L'UNE DANS L'AUTRE**
TURBINE MIT MINDESTENS ZWEI INEINANDER VERSCHACHTELTEN 3D-HOHLRÄDERN
TURBINE COMPRISING AT LEAST TWO HOLLOW 3D WHEELS NESTED INSIDE ONE ANOTHER

(30) Priorité: 29.10.2012 FR 1202880
(43) Date de publication de la demande: 02.09.2015
(73) Titulaire: Carpyz SAS, 92136 Issy les Moulineaux (FR)
(72) Inventeur: CARROUSET, Pierre, F-75015 Paris (FR); CARROUSET, Nicole, F-75015 Paris (FR); CARROUSET, Gabrielle, F-75015 Paris (FR)
(74) Mandataire: Dennemeyer & Associates S.A.
(86) Numéro de dépôt international: PCT/EP2013/072133
(87) Numéro de publication internationale: WO 2014/067823

(56) Documents cités:
- FR-A1- 2 507 252
- US-A- 5 120 194

## Description

Les hélices sont employées depuis très longtemps pour capter l'énergie des fluides, par exemple des éoliennes sont utilisées avec des dimensions raisonnables dans les pays désertiques pour extraire l'eau des puits et en Europe pour donner à boire aux vaches dans les prés ou encore les moulins à vent pour faire la farine.

Si ces dernières ont survécue aux épreuves du temps c'est qu'elles ont une surface d'échange importante avec l'air, dite mouillée, grâce aux nombreuses larges pales qui couvrent la quasi-totalité du cercle, captant ainsi le maximum d'énergie contenue dans le vent avec un diamètre minimum. Le document FR-2507252 montre une éolienne d'accord au préambule de la revendication 1. Les nouvelles très grandes éoliennes qui abiment nos paysages n'ont pas une surface mouillée importante et d'ailleurs elles ont des rendements moyens de l'ordre de 20%.

Les manches à vent qui indiquent le sens et la force du vent sur les aéroports et sur le bord des routes sont un exemple de l'utilisation du vent avec un dispositif qui est à la troisième dimension.

L'outil informatique industriel CARPYZ permet de générer facilement à la demande et à l'infini, des pales hélicoïdales de formes très complexes et fourni les fichiers informatiques pour les construire.

Grâce à une recherche longue et fastidieuse poursuivie pendant de des décennies il a été possible de découvrir ces nouvelles turbines à roues creuses 3D emboîtées l'une dans l'autre qui vont permettre de capter une même quantité d'énergie, avec un diamètre au moins 6 à 10 fois inférieure à celui des grandes éoliennes connues actuellement.

La turbine de la présente invention capte le fluide sur la quasi totalité de la surface d'un cercle dans une roue creuse fixe comme les manches à vent, et par des pales entrelacées génèrent des canaux qui orientent le fluide non pas au bout mais de façon tangentielle à la périphérie de la manche.

Ce qui est nouveau c'est qu'une roue creuse rotative entoure la roue fixe et reçoit tout autour par l'intérieur les jets de fluide projetés par les canaux de la roue fixe , dans des godets placés en concordance qui sont poussés et reculent, comme ceux des turbines PELTON qui sont utilisées depuis très longtemps dans les centrales hydro électriques, et ont les meilleurs rendements connus au monde qui avoisinent les 90 %.

Les formes des lames qui constituent ces roues sont très complexes et doivent être adaptées pour chaque roue construite en fonction des fluides et des caractéristiques recherchées.

Les lames des roues fixe et rotative qui sont entrelacées, forment une structure nid d'abeille, mécaniquement très résistante, et la roue mobile est de plus protégée par la roue fixe.

Ces turbines comportant au moins deux roues 3D creuses emboîtées l'une dans l'autre sont remarquables d'une part par le fait qu'une roue creuse fixe (A) est ouverte à l'avant à l'entrée du fluide à son plus grand diamètre et est constituée de rondelles circulaires successives incurvées (B) qui ont chacune leur diamètre intérieur qui décroit en allant de l'avant vers le centre et ont leur bord intérieur orienté vers l'avant et sont entrecroisées par des lames de préférence enroulées en spirale (C) qui vont de l'avant vers le centre et forment avec les rondelles des canaux orientés de façon tangentielle vers la périphérie de la roue et que d'autre part au moins une roue rotative (D) qui entoure la roue fixe est constituée de lames de préférence enroulées en spirale qui vont du grand diamètre vers le centre et sont incurvées en forme de godets creux dont l'un des becs est orienté de façon tangentielle (E) à l'intérieur de cette roue et ces lames godet sont entrecroisées avec des rondelles circulaires (F) qui vont de l'intérieur vers l'extérieur et cloisonnent les godets et les bords intérieurs de ces dites rondelles sont mis au mieux en continuité avec les rondelles de la roue fixe (G).

Aussi la roue fixe est pourvue à l'intérieur en son centre d'un bouclier circulaire dont la pointe est dirigée vers l'avant (H).

De même les turbines sont contenues dans une enveloppe extérieure qui couvre les roues et qu'elle est solidarisée à l'avant avec la roue fixe et qu'elle est solidarisée à l'avant avec la roue fixe et que la surface de l'ouverture de l'enveloppe est à l'avant (I) plus petite que celle située vers l'arrière de la roue mobile (J).

Au plan mécanique la roue rotative est tenue au centre par un palier (K porté par l'intérieur de la roue fixe et par des supports radiaux qui rejoignent l'enveloppe fixe qui entoure l'ensemble.

Aussi le grand diamètre des lames de la roue fixe est solidarisé avec le petit diamètre de l'enveloppe fixe par une bague prolongée devant qui va en augmentant de diamètre en entonnoir et va jusqu'à rejoindre et se confondre avec la projection du bord supérieur de l'enveloppe.

Sur le plan géométrique le profil des surfaces balayées des roues à l'intérieur et à l'extérieur a tendance à être semi sphérique ou ogival.

Il est intéressant de signaler que devant la roue fixe est placé un grillage dont les mailles sont d'une section inférieur à celle des canaux et que d'autre part ce filtre est tenu au centre par la pointe du bouclier.

Il est remarquable qu'à son grand diamètre le bouclier est poursuivi par la dernière petite rondelle de la roue fixe

Pour placer les turbines l'enveloppe fixe est pourvue sous elle de pattes de fixations.

### Les dessins

Les dessins sont des schémas, vues partielles volontairement simplifiés, qui montrent la construction de base de cette turbine

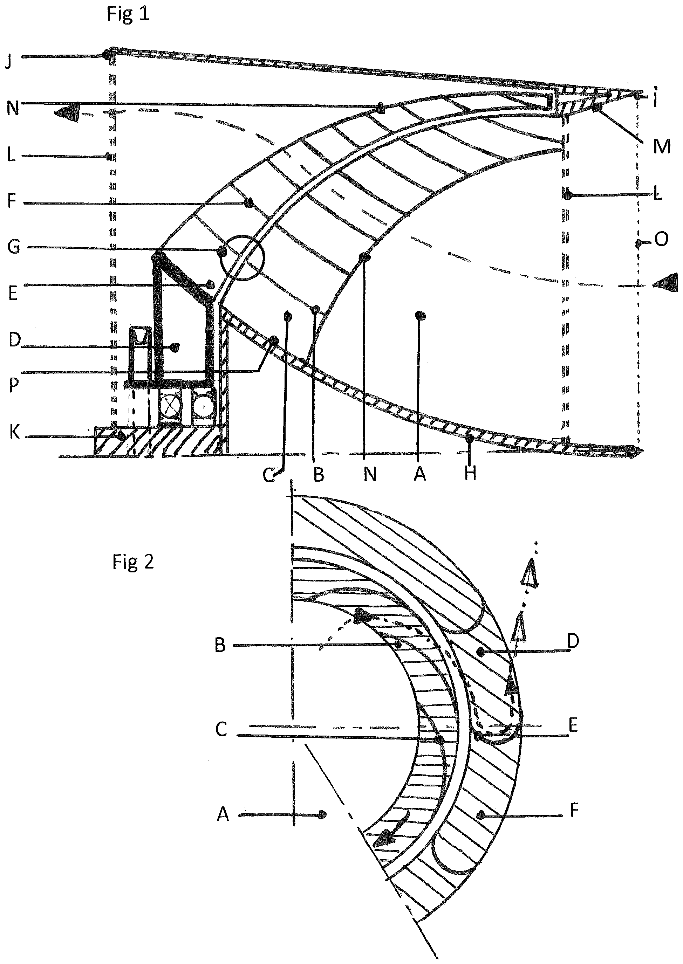

Le dessin Fig 1 montre sur une demie coupe qu'une roue creuse fixe (A) est ouverte à l'avant à l'entrée du fluide à son plus grand diamètre et est constituée de rondelles circulaires successives incurvées (B) qui ont chacune leur diamètre intérieur qui décroit en allant de l'avant vers le centre et ont leur bord intérieur orienté vers l'avant et sont entrecroisées par des lames de préférence enroulées en spirale (C) qui vont de l'avant vers le centre et forment avec les rondelles des canaux orientés de façon tangentielle vers la périphérie de la roue et que d'autre part au moins une roue rotative (D) qui entoure la roue fixe est constituée de lames de préférence enroulées en spirale qui vont du grand diamètre vers le centre et sont incurvées en forme de godets creux dont l'un des becs est orienté de façon tangentielle (E) à l'intérieur de cette roue et ces lames godet sont entrecroisées avec des rondelles circulaires (F) qui vont de l'intérieur vers l'extérieur et cloisonnent les godets et les bords intérieurs de ces dites rondelles sont mis au mieux en continuité avec les rondelles de la roue fixe (G).

Il montre aussi que la roue fixe est pourvue à l'intérieur en son centre d'un bouclier circulaire dont la pointe est dirigée vers l'avant (H), et aussi que les turbines sont contenues dans une enveloppe extérieure qui couvre les roues et qu'elle est solidarisée à l'avant avec la roue fixe et que la surface de l'ouverture de l'enveloppe est à l'avant (I) plus petite que celle située vers l'arrière de la roue mobile (J).

De même il montre que la roue rotative est tenue au centre par un palier (K) portés par l'intérieur de la roue fixe et par des supports radiaux (L) qui rejoignent l'enveloppe fixe qui entoure l'ensemble.

Il est montré aussi que le grand diamètre des lames de la roue fixe est solidarisé avec le petit diamètre de l'enveloppe fixe par une bague (M) prolongée devant qui va en augmentant de diamètre en entonnoir et va jusqu'à rejoindre et se confondre avec la projection du bord supérieur de l'enveloppe.

Il montre comme exemple que le profil des surfaces balayés des roues à l'intérieur et à l'extérieur a tendance à être semi sphérique ou ogival (N).

Il montre que d'une part devant la roue fixe est placé un grillage (O) dont les mailles sont d'une section inférieur à celle des canaux et d'autre part ce filtre est tenu au centre par la pointe du bouclier.

Il montre aussi qu'à son grand diamètre le bouclier est poursuivi par la dernière petite rondelle de la roue fixe (P).

Le dessin Fig 2 montre d'une part une rondelle circulaire (B) de la roue fixe (A) qui porte une lame (C) qui oriente le fluide vers la périphérie de la roue et d'autre part une rondelle circulaire (F) de la roue rotative (D) qui s'entrelace avec les lames longitudinales en forme de godet dont le bord intérieur est orienté de façon tangentielle(E).

## Revendications

1. Turbine comportant au moins deux roues 3D creuses emboîtées l'une dans l'autre, une des roues étant une roue creuse fixe (A) est ouverte à l'avant à l'entrée du fluide à son plus grand diamètre et est constituée de rondelles circulaires successives incurvées (B) qui ont chacune leur diamètre intérieur qui décroit en allant de l'avant vers le centre et ont leur bord intérieur orienté vers l'avant, et l'autre roue étant une roue rotative (D) qui entoure la roue fixe est constituée de lames de préférence enroulées en spirale qui vont du grand diamètre vers le centre,
**caractérisé en ce que**:
lesdites rondelles circulaires successives incurvées sont entrecroisées par des lames de préférence enroulées en spirale (C) qui vont de l'avant vers le centre et forment avec les rondelles des canaux orientés de façon tangentielle vers la périphérie de la roue et **en ce que** lesdites lames de la roue rotative (D) sont incurvées en forme de godets creux dont l'un des becs est orienté de façon tangentielle (E) à l'intérieur de cette roue et ces lames godet sont entrecroisées avec des rondelles circulaires (F) qui vont de l'intérieur vers l'extérieur et cloisonnent les godets et les bords intérieurs de ces dites rondelles sont mis au mieux en continuité avec les rondelles de la roue fixe (G).

2. Turbine comportant au moins deux roues 3D creuses emboîtées l'une dans l'autre selon la revendication précédente, **caractérisée par le fait que** la roue fixe est pourvue à l'intérieur en son centre d'un bouclier circulaire dont la pointe est dirigée vers l'avant (H).

3. Turbine comportant au moins deux roues 3D creuses emboîtées l'une dans l'autre selon l'une des revendications précédentes, **caractérisée par** le fait par le fait que les turbines sont contenues dans une enveloppe extérieure qui couvre les roues et qu'elle est solidarisée à l'avant avec la roue fixe et que la surface de l'ouverture de l'enveloppe est à l'avant (I) plus petite que celle située vers l'arrière de la roue mobile (J).

4. Turbine comportant au moins deux roues 3D creuses emboîtées l'une dans l'autre selon l'une des revendications précédentes, **caractérisée par le fait que** la roue rotative est tenue au centre par un palier (K) portés par l'intérieur de la roue fixe et par des supports radiaux (L) qui rejoignent l'enveloppe fixe qui entoure l'ensemble.

5. Turbine comportant au moins deux roues 3D creuses emboitées l'une dans l'autre selon l'une des revendications précédentes, **caractérisée par le fait que** le grand diamètre des lames de la roue fixe est solidarisé avec le petit diamètre de l'enveloppe fixe par une bague (M) prolongée devant qui va en augmentant de diamètre en entonnoir et va jusqu'à rejoindre et se confondre avec la projection du bord supérieur de l'enveloppe.

6. Turbine comportant au moins deux roues 3D creuses emboitées l'une dans l'autre selon l'une des revendications précédentes, **caractérisée par le fait que** le profil des surfaces balayés des roues à l'intérieur et à l'extérieur a tendance à être semi sphérique ou ogival (N).

7. Turbine comportant au moins deux roues 3D creuses emboitées Tune dans l'autre selon l'une des revendications précédentes, **caractérisée par** le fait d'une part par le fait que devant la roue fixe est placé un grillage (O) dont les mailles sont d'une section inférieur à celle des canaux et que d'autre part ce filtre est tenu au centre par la pointe du bouclier.

8. Turbine comportant au moins deux roues 3D creuses emboitées l'une dans l'autre selon l'une des revendications précédentes, **caractérisée par le fait qu'**à son grand diamètre le bouclier est poursuivi par la dernière petite rondelle de la roue fixe (P).

9. Turbine comportant au moins deux roues 3D creuses emboitées l'une dans l'autre selon l'une des revendications précédentes, **caractérisée par le fait que** l'enveloppe fixe est pourvue sous elle de pattes de fixations.

## Patentansprüche

1. Turbine, aufweisend mindestens zwei ineinander verschachtelte 3D-Hohlräder, wobei eines der Räder ein festes Hohlrad (A) ist, das vorn am Fluideinlass an seinem größten Durchmesser geöffnet ist und von aufeinanderfolgenden gekrümmten kreisförmigen Scheiben (B) gebildet ist, die jeweils ihren Innendurchmesser haben, der von vorn in Richtung Zentrum abnimmt und ihren Innenrand nach vorn zeigend haben, und wobei das andere Rand ein rotierendes Rad (D) ist, welches das feste Rad umgibt, gebildet von vorzugsweise spiralförmig gewickelten Lamellen, die vom großen Durchmesser in Richtung Zentrum gehen,
**dadurch gekennzeichnet, dass**:
die aufeinanderfolgenden gekrümmten kreisförmigen Scheiben von vorzugsweise spiralförmig gewickelten Lamellen (C) gekreuzt sind, die von vorn in Richtung Zentrum gehen und mit den Scheiben Kanäle bilden, die tangential in Richtung Peripherie des Rads ausgerichtet sind und dass die Lamellen des rotierenden Rads (D) in Form hohler Becher gekrümmt sind, von denen einer der Schnäbel tangential (E) in das Innere dieses Rads ausgerichtet ist und diese Becherlamellen mit kreisrunden Scheiben (F) gekreuzt sind, die von innen nach außen gehen und die Becher einschließen und sich die Innenränder dieser Scheiben bestmöglich in Kontinuität mit den Scheiben des festen Rads (G) befinden.

2. Turbine, aufweisend mindestens zwei ineinander verschachtelte 3D-Hohlräder nach vorangehendem Anspruch, **dadurch gekennzeichnet, dass** das feste Rad innen in seinem Zentrum mit einem kreisrunden Schild ausgestattet ist, dessen Spitze nach vorn (H) gerichtet ist.

3. Turbine, aufweisend mindestens zwei ineinander verschachtelte 3D-Hohlräder nach einem der vorangehenden Ansprüche, **dadurch gekennzeichnet, dass** die Turbinen in einem Außenmantel enthalten sind, welcher die Räder bedeckt und dass sie vorn mit dem festen Rad fest verbunden ist und dass die Oberfläche der Öffnung des Mantels vorn (I) kleiner ist als die, welche sich hinter dam bewegliche Rad (J) befindet.

4. Turbine, aufweisend mindestens zwei ineinander verschachtelte 3D-Hohlräder nach einem der vorangehenden Ansprüche, **dadurch gekennzeichnet, dass** das rotierende Rad im Zentrum von einem Lager (K) gehalten wird, getragen vom Innern des festen Rads und von radialen Stützen (L), welche den festen Mantel erreichen, der die Einheit umgibt.

5. Turbine, aufweisend mindestens zwei ineinander verschachtelte 3D-Hohlräder nach einem der vorangehenden Ansprüche, **dadurch gekennzeichnet, dass** der große Durchmesser der Lamellen des festen Rads mit dem kleinen Durchmesser des festen Mantels mittels eines vorn verlängerten Rings (M) fest verbunden ist, dessen Durchmesser trichterförmig zunimmt und die Projektion des oberen Rands des Mantels erreicht und mit ihm zusammenfällt.

6. Turbine, aufweisend mindestens zwei ineinander verschachtelte 3D-Hohlräder nach einem der vorangehenden Ansprüche, **dadurch gekennzeichnet, dass** das Profil der abgetasteten Flächen der Räder innen und außen die Tendenz hat, halbkugelig oder spitzbogig (N) zu sein.

7. Turbine, aufweisend mindestens zwei ineinander verschachtelte 3D-Hohlräder nach einem der vorangehenden Ansprüche, **dadurch gekennzeichnet, dass** zum einen vor dem festen Rad ein Gitter (O) platziert ist, dessen Maschen einen kleineren Querschnitt als die Kanäle haben und dass zum anderen dieser Filter im Zentrum von der Spitze des Schilds gehalten wird.

8. Turbine, aufweisend mindestens zwei ineinander verschachtelte 3D-Hohlräder nach einem der vorangehenden Ansprüche, **dadurch gekennzeichnet, dass** dem Schild nach seinem großen Durchmesser die letzte kleine Scheibe des festen Rads (P) folgt.

9. Turbine, aufweisend mindestens zwei ineinander verschachtelte 3D-Hohlräder nach einem der vorangehenden Ansprüche, **dadurch gekennzeichnet, dass** der feste Mantel unter sich mit Befestigungslaschen ausgestattet ist.

## Claims

1. A turbine including at least two hollow 3D wheels nested inside one another,
one of said wheels being a stationary hollow wheel (A) which is open at the front to the entry of the fluid at its largest diameter and is made up of curved successive circular washers (B), the inner diameter of each of which decreases from the front toward the center and the inner edge of each of which is oriented toward the front,
and the other wheel being a rotating wheel (D) which surrounds the stationary wheel and is made up of blades preferably wound in a spiral that go from the large diameter toward the center,
**characterized in that**
said curved successive circular washers (B) are interlaced by blades that are preferably wound in a spiral (C) that go from the front toward the center and form, with the washers, channels oriented tangentially toward the periphery of the wheel,
and **in that** said blades of the rotating wheel (D) are curved in the form of hollow buckets, one of the spouts of which is oriented tangentially (E) to the inside of that wheel and said bucket blades are interlaced with circular washers (F) that go from the inside toward the outside and partition the buckets, and the inner edges of said washers are at best in continuity with the washers of the stationary wheel (G).

2. The turbine including at least two hollow 3D wheels nested inside one another according to the preceding claim, **characterized in that** the stationary wheel is provided, at the inside in its center, with a circular shield whereof the tip is oriented upward (H).

3. The turbine including at least two hollow 3D wheels nested inside one another according to one of the preceding claims, **characterized in that** the turbines are contained in an outer enclosure that covers the wheels, and it is secured in the front with the stationary wheel and the surface of the opening of the enclosure is smaller in the front (I) than that situated toward the rear of the moving wheel (J).

4. The turbine including at least two hollow 3D wheels nested inside one another according to one of the preceding claims, **characterized in that** the rotating wheel is kept at the center by a bearing (K) supported by the inside of the stationary wheel and by radial supports (L) that join the stationary enclosure that surrounds the assembly.

5. The turbine including at least two hollow 3D wheels nested inside one another according to one of the preceding claims, **characterized in that** the large diameter of the blades of the stationary wheel is secured with the small diameter of the stationary enclosure by a ring (M) extended in front that increases from diameter to funnel and joins and combines with the projection of the upper edge of the enclosure.

6. The turbine including at least two hollow 3D wheels nested inside one another according to one of the preceding claims, **characterized in that** the profile of the surfaces swept by the wheels inside and outside tends to be semi-spherical or ogival (N).

7. The turbine including at least two hollow 3D wheels nested inside one another according to one of the preceding claims, characterized on the one hand in that in front of the stationary wheel, a grate (O) is placed whereof the meshes have a section smaller than that of the channels, and on the other hand, that filter is kept at the center by the tip of the shield.

8. The turbine including at least two hollow 3D wheels nested inside one another according to one of the preceding claims, **characterized in that** at its large diameter, the shield is followed by the last small washer of the stationary wheel (P).

9. The turbine including at least two hollow 3D wheels nested inside one another according to one of the preceding claims, **characterized in that** the stationary enclosure is provided with fastening tabs below it.
